# FASCICULE DE BREVET EUROPEEN

(11) **EP 1 734 333 B1**
(45) Date de publication et mention de la délivrance du brevet: **02.07.2008**
(21) Numéro de dépôt: 06019954.4
(22) Date de dépôt: 02.11.2005
(51) Int. Cl.: F42B 12/36, C06B 25/12, C06C 15/00, C06D 3/00, F42C 19/08, F41J 9/08, B64C 3/00, B64C 39/02, F42B 10/04

(54) **Munition ou composant de munition constituant un engin volant tel un drône**
Munition oder Munitionsteil das die Form eines Flugkörpers wie einer Drohne hat
Ammunition or ammunition component having the shape of a flying object such as a drone

(30) Priorité: 22.11.2004 FR 0412401
(43) Date de publication de la demande: 20.12.2006
(62) Demande divisionnaire de: 05292311.7
(73) Titulaire: NEXTER Munitions, 78000 Versailles (FR)
(72) Inventeur: Brunet, Luc, 18000 Bourges (FR); Regis, Muriel, 18000 Bourges (FR)
(74) Mandataire: Célanie, Christian

(56) Documents cités:
- DE-A1- 3 522 008
- DE-A1- 10 238 717
- FR-A- 1 160 953
- US-A- 2 977 885
- US-A- 2 998 772
- US-A- 3 000 308
- US-A- 3 724 382
- US-A- 3 960 049
- US-A- 4 119 036
- US-A- 4 376 083
- US-B1- 6 666 143

## Description

Le domaine technique de l'invention est celui des drones comprenant un chargement pyrotechnique associé à une structure, telle une enveloppe.

Les chargements pyrotechniques connus comprennent habituellement un ou plusieurs matériaux énergétiques, tels que des explosifs ou des compositions pyrotechniques.

Dans les munitions ou composants connus, les matériaux énergétiques sont toujours mis en place dans des enveloppes qui, outre leur fonction par exemple génératrices d'éclats (pour les charges explosives), permettent d'assurer la tenue mécanique du matériau énergétique. Ces enveloppes réduisent la masse de chargement pyrotechnique qui peut être emportée par la munition. Elles constituent ainsi un poids mort qui pénalise les capacités d'emport notamment lorsque la munition considérée est un aéronef léger tel un drone d'observation ou un drone d'attaque. Par ailleurs, elles peuvent constituer un frein à la dégradation naturelle des résidus de la munition dans l'environnement.

Les munitions ou composants connus comprennent habituellement un matériau énergétique conçu pour remplir une seule fonction bien déterminée. Les explosifs assurent ainsi une fonction de destruction. Les compositions pyrotechniques permettent (en fonction de leur nature) d'assurer une fonction de masquage, de leurrage ou bien d'apporter un effet non létal, tel que génération de bruit, de lumière, d'odeurs ou de fumée colorée.

Il peut être souhaitable pour limiter la dotation en munitions, ou pour simplifier la conception de ces munitions, de donner une certaine polyvalence aux chargements embarqués, cela afin de permettre de remplir différentes missions avec une seule munition.

Le brevet DE-3522008, qui forme une base pour le préambule de la revendication 1, décrit un engin volant destiné à la lutte contre les avions ou objets volants ennemis. Il constitue une munition autopropulsée munie d'ailettes de guidage comportant une enveloppe fragmentable destinée à engendrer des éclats calibrés entourant l'ensemble de la munition et renfermant les éléments nécessaires comme par exemple l'allumeur, l'électronique, etc... L'enveloppe peut se présenter sous la forme de projectiles ou d'éclats préformés par exemple des billes, des cubes ou des cylindres. Il s'agit d'une munition lancée de manière classique et stabilisée par des ailettes. Aucune mention de matériau énergétique allégé n'est indiquée pour constituer l'enveloppe.

Le brevet US-4119036 décrit également une munition du même type stabilisée par des ailettes. Il s'agit ici de réaliser une roquette entièrement combustible incorporant une enveloppe combustible comprenant un certain nombre de couches lamellaires distinctes, par exemple une feuille métallique alternant avec une couche adhésive combustible. Le but de cette réalisation est de rendre combustible l'enveloppe qui se désintègre en fines particules d'oxyde

C'est le but de l'invention que de proposer un drone permettant de pallier de tels inconvénients. Un tel drone peut remplir une fonction d'observation classique et une fonction pyrotechnique sans pénaliser les capacités d'emport de celui-ci.

Ainsi le drone selon l'invention comporte un matériau énergétique ayant par lui-même une tenue mécanique permettant de l'employer comme élément d'enveloppe ou de structure.

Les caractéristiques mécaniques et la légèreté de ce matériau énergétique peuvent ainsi être calculées pour qu'il soit possible de réaliser avec lui tout ou partie du corps ou de l'engin volant.

Le drone selon l'invention peut par ailleurs, selon une variante, mettre en oeuvre un matériau énergétique ayant au moins deux régimes de fonctionnement : un régime explosif et un régime de combustion.

Le drone selon l'invention peut alors, sans modifications de structure, remplir au moins deux missions différentes : une mission de destruction et une mission de protection par masquage, brouillage, leurrage ou dissuasion non létale.

Ainsi, l'invention a pour objet un un drone ayant les caractéristiques des revendications 1 ou 3.

Selon une caractéristique, le drone comporte au moins un dispositif d'amorçage de la structure énergétique, dispositif relié à un moyen de commande.

Le premier matériau de renfort structural pourra comprendre au moins un des matériaux suivants : micro ballons phénoliques, polystyrène en bille, nano tubes de carbone.

Selon une variante de réalisation, le drone pourra comporter également un deuxième matériau de renfort structural choisi parmi les fibres longues naturelles ou synthétiques ou les tissus réalisés avec de telles fibres.

Les fibres pourront être choisies parmi les matériaux suivants: fibres de carbone, de verre, de chanvre, de kevlar.

L'engin volant pourra ainsi comprendre globalement entre 10 et 35% en masse de matériau de renfort structural.

Avantageusement, le drone pourra comprendre au moins un matériau de masquage ou de leurrage.

Le matériau de masquage ou de leurrage pourra être choisi parmi les matériaux suivants : fibres de carbone courtes, poudre de carbone, poudre de laiton, de bronze, paillettes métallisées, fibres polymères revêtues d'un matériau conducteur, phosphore rouge.

Selon un mode de réalisation, le drone comportera au moins un composant énergétique qui est un explosif.

Le composant énergétique pourra alors comprendre au moins un explosif fusible associé à un explosif non fusible.

Plus particulièrement, le drone pourra avoir une partie au moins de sa structure réalisée en un matériau énergétique ayant la composition en masse suivante :
- 65 à 90% d'une composition explosive associant un ou plusieurs matériaux explosifs et éventuellement un liant,
- 10 à 30% d'un premier matériau de renfort structural,
- 0 à 5% d'un deuxième matériau de renfort sous forme de fibres longues.

Plus particulièrement, on pourra réaliser le drone dont une partie au moins de la structure est réalisée en un matériau énergétique ayant la composition en masse suivante :
- 10 à 30% d'un explosif secondaire fusible,
- 10 à 30% d'un premier matériau de renfort structural,
- 50 à 60% d'explosif secondaire non fusible,
- 0 à 5% de fibres de renfort structural,
- 0 à 5% de matériau de masquage ou leurrage

Selon un autre mode de réalisation, le drone pourra être tel qu'une partie au moins de sa structure sera réalisée en un matériau énergétique ayant la composition en masse suivante:
- 10 à 30% d'un premier matériau de renfort structural,
- 50 à 60% d'explosif secondaire non fusible,
- 10 à 30% de liant synthétique,
- 0 à 5% de fibres de renfort structural,
- 0 à 5% de matériau de masquage ou leurrage.

Selon un exemple particulier de réalisation, on pourra réaliser le drone dont une partie au moins de la structure sera réalisée en un matériau énergétique ayant la composition en masse suivante :
- 20% de trinitrotoluène,
- 50% d'hexogène,
- 10% de micro ballons,
- 20% de fibres de carbone ou de verre.

Selon un autre exemple de réalisation on pourra réaliser le drone dont une partie au moins de la structure sera réalisée en un matériau énergétique ayant la composition en masse suivante :
- 20% de trinitrotoluène,
- 50% d'hexogène,
- 10% de micro ballons,
- 10% de fibres de carbone ou de verre,
- 10% de poudre d'aluminium.

Selon un autre mode de réalisation, le drone sera tel qu'au moins un des composants énergétiques sera constitué par une composition pyrotechnique.

La composition pyrotechnique pourra être une composition fumigène ou éclairante.

On pourra ainsi plus particulièrement réaliser le drone dont une partie au moins de la structure sera réalisée en un matériau énergétique ayant la composition en masse suivante :
- 75% de composition fumigène,
- 15% d'un premier matériau de renfort structural.

On pourra également réaliser le drone dont une partie au moins de la structure sera réalisée en un matériau énergétique ayant la composition en masse suivante :
- 75% de composition éclairante,
- 15% d'un premier matériau de renfort structural.

On pourra également réaliser le drone dont une partie au moins de la structure sera réalisée en un matériau énergétique ayant la composition en masse suivante :
- 50% à 65% d'une composition pyrotechnique,
- 10% à 30% d'un premier matériau de renfort structural,
- 15% à 25% de poudre de laiton ou de fibres de carbone ou de verre aluminisées.

Selon un autre mode de réalisation de l'invention, le matériau énergétique pourra comprendre au moins un composant explosif et au moins un matériau de masquage ou de leurrage et la munition ou le composant de munition comportera au moins deux dispositifs d'amorçage de la structure énergétique pouvant être initiés par un moyen de commande, un premier dispositif conçu pour communiquer un régime de détonation à la structure assurant ainsi à la munition ou au composant de munition une fonction de destruction et un deuxième dispositif conçu pour communiquer un régime de combustion à la structure assurant ainsi à la munition ou au composant de munition une fonction de masquage ou de leurrage.

La structure en matériau énergétique pourra porter également au moins une charge utile telle qu'une caméra et/ou un relais de transmission d'informations.

La structure en matériau énergétique pourra être recouverte d'une couche de protection.

L'invention sera mieux comprise à la lecture de la description qui va suivre de modes particuliers de réalisation, description faite en référence aux dessins annexés et dans lesquels :
- la figure 1 représente schématiquement une munition qui ne fait pas partie de l'invention mais facilite sa compréhension,
- la figure 2 représente schématiquement en vue de dessus un drone selon un premier mode de réalisation de l'invention, et
- la figure 3 représente schématiquement en vue latérale un autre mode de réalisation d'un drone selon l'invention.

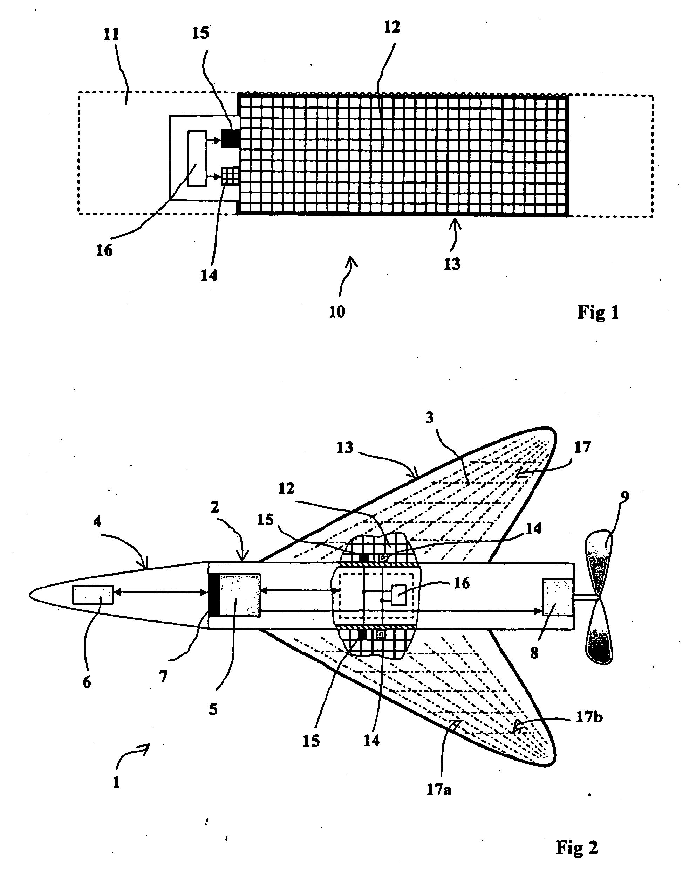

La figure 1 montre une munition ou un composant de munition dont une partie au moins de sa structure est réalisée en un matériau énergétique comprenant au moins un composant énergétique mélangé à au moins un premier matériau de renfort structural.

La structure considérée pourra être une enveloppe de la munition, enveloppe délimitant alors un volume renfermant un chargement explosif classique ou bien une composition pyrotechnique.

Préférentiellement, c'est tout le corps de la munition qui constitue lui-même une structure formée par un matériau énergétique structural ayant une tenue mécanique suffisante.

Un tel matériau énergétique structural comprenant au moins un composant énergétique mélangé à au moins un matériau de renfort structural est donc essentiel.

D'une façon classique on entend par composant énergétique un matériau susceptible de fournir de l'énergie chimique et/ou mécanique sous forme d'une flamme ou d'une onde de détonation lorsqu'il se trouve initié par un composant d'amorçage approprié (inflammateur ou détonateur).

Un composant énergétique peut ainsi avoir un régime de fonctionnement en détonation ou bien simplement un régime de fonctionnement en combustion. On sera assuré d'obtenir un matériau ayant deux modes de fonctionnement si le matériau présente une température de flamme en combustion supérieure à 2000 K et une célérité de détonation supérieure à 3000 m/s.

Les composants énergétiques regroupent principalement les explosifs et les compositions pyrotechniques.

D'une manière générale bien connue, les explosifs sont des mélanges ou des corps purs dont le régime de décomposition fonctionnel est la détonation (vitesse de propagation de la réaction supérieure à 3000 m/s).

Une composition pyrotechnique est une composition oxydo réductrice hétérogène dont le régime de décomposition ou la combustion produit des effets spécifiques : flamme, lumière bruit, fumée, dispersion de substances non létales....

Les composants énergétiques ont ainsi pour objet d'assurer une fonction pyrotechnique donnée : vulnérante pour les explosifs, masquage, leurrage ou non létal pour les compositions pyrotechniques....

Le premier matériau de renfort structural mis en oeuvre comprendra de préférence un matériau permettant un allègement du bloc de matériau énergétique réalisé sans nuire à sa tenue mécanique.

On pourra par exemple adopter un premier matériau de renfort structural qui comprend au moins un des matériaux suivants : sphères creuses (tels que micro ballons phénoliques ou polystyrène en bille), fibres courtes (longueur inférieure à 10 mm) de carbone, fibres végétales ou synthétiques (aramide par exemple), tubes (nanotubes de carbone), autres matériaux pulvérulents. La granulométrie du matériau de renfort ainsi que la forme choisie vont déterminer la qualité de l'adhérence de la charge au liant ainsi que les propriétés mécaniques. L'Homme du Métier choisira le type de matériau de renfort approprié en fonction de la nature du matériau énergétique utilisé et des contraintes mécaniques que la munition devra subir.

De tels matériaux sont disponibles commercialement dans différentes granulométries.

Les micros ballons sont notamment utilisés pour fabriquer des pâtes à sceller les inserts, et de manière générale pour réaliser des matériaux composites ayant une bonne tenue en compression et cisaillement. Ils sont très utilisés pour la réalisation de pièces de structure dans le domaine aéronautique.

On a pu vérifier qu'avec une proportion d'un tel matériau de renfort comprise entre 10% et 35% en masse il était possible de réaliser un bloc de matériau énergétique structural conservant des capacités pyrotechniques intéressantes.

Ainsi on a pu obtenir des explosifs dont la célérité de détonation pouvait aller de 3000m/s (beaucoup de renfort) à 8000 m/s (peu de renfort).

Par ailleurs l'ajout de renforts (tel que des fibres de carbone) dans les compositions pyrotechniques augmente la résistance des comprimés sans diminuer notablement l'efficacité de la composition et sa vitesse de combustion.

L'allégement de la munition peut atteindre ainsi près de 30% et cet allègement présente de nombreux avantages d'un point de vue opérationnel.

Pour une munition classique (projectile, missile, roquette, mine) il permet de faciliter les opérations de transport et de mise en oeuvre logistique.

Pour un projectile autopropulsé tel une roquette ou un missile ou bien un drône, l'allégement de la charge explosive libère de la masse pour l'intégration des autres éléments du projectile (autodirecteur, propulseur, sous munitions).

En fonction des applications envisagées, par exemple pour des munitions ou composants de munitions fortement sollicités mécaniquement, il sera possible de compléter le premier renfort structural par un deuxième renfort comprenant des fibres longues sous la forme de fibres libres ou bien de tissu (longueur de fibres supérieure à 100mm). On pourra utiliser ainsi des fibres ou tissus de carbone, de verre, de chanvre ou de kevlar (marque déposée). Ces fibres seront disposées en fonction des orientations des contraintes mécaniques dans la munition considérée. Il sera également possible d'utiliser des structures de type nids d'abeille.

Les techniques de mise en oeuvre sont celles de la fabrication de pièces composites : coulée d'une matrice sur une charge. La matrice est alors constituée par le matériau énergétique et la charge est constituée par les fibres de renfort.

Les composants énergétiques mis en oeuvre pourront comprendre au moins un explosif.

Cet explosif sera avantageusement un explosif fusible, tel le TNT ou la TNMA (trinitrométhylaniline) qui pourra être associé à un explosif non fusible (tel l'octogène ou l'hexogène).

La plupart des matériaux explosifs ont deux modes stables de fonctionnement possibles (combustion et détonation) qui dépendent du mode d'initiation mis en oeuvre et notamment du niveau d'énergie communiqué par les moyens d'initiation.

Il est possible en mettant en oeuvre un détonateur de communiquer à l'explosif un régime détonant (vitesse de propagation de la réaction supérieure à 3000 m/s).

En mettant en oeuvre un inflammateur on pourra communiquer à l'explosif un régime de combustion (vitesse de réaction inférieure à 1000m/s).

On pourra incorporer au matériau énergétique au moins un matériau de masquage ou de leurrage.

Ainsi, une fonction masquage ou leurrage pourra être obtenue avec le matériau lorsque celui ci est initié avec un régime de combustion.

Comme matériau de masquage on pourra choisir les fibres de carbone courtes (longueur inférieure à 8mm), la poudre de carbone, les poudres métalliques (laiton ou bronze) les poudres d'oxydes métalliques (TiO₂, SiO₂). La granulométrie de ces poudres sera choisie telle que le diamètre médian soit compris entre 10 et 20 µm ou proche de la longueur d'onde du rayonnement incident à masquer.

Comme matériau de leurrage on pourra par exemple utiliser des particules ou des fibres conductrices de longueur inférieure au centimètre (fibres de verre ou polymère revêtues d'un métal conducteur, nano tubes de carbone).

On pourrait également incorporer des granules ou pastilles d'une composition pyrotechnique à base de phosphore dont la combustion par dispersion permettra une saturation de zone par la dispersion de points chauds répartis sur une grande surface.

Lors de la mise en détonation ou en combustion du matériau énergétique, le matériau de masquage ou de leurrage sera dispersé (et éventuellement initié), assurant ainsi la fonction souhaitée.

On pourra ainsi réaliser une munition comprenant un matériau énergétique structural ayant la composition en masse suivante :
- 65 à 90% d'une composition explosive associant un ou plusieurs matériaux explosifs et éventuellement un liant,
- 10 à 30% d'un premier matériau de renfort structural,
- 0 à 5% d'un deuxième matériau de renfort sous forme de fibres longues.

On pourra notamment réaliser une munition comprenant un matériau énergétique structural ayant la composition en masse suivante :
- 10 à 30% d'un explosif secondaire fusible,
- 10 à 30% de micro ballons (phénoliques ou polyuréthanes),
- 50 à 60% d'explosif secondaire non fusible,
- 0 à 5% de fibres de renfort structural,
- 0 à 5% de matériau de masquage ou de leurrage.

Un tel matériau énergétique est mis en oeuvre par coulée.

On pourra aussi réaliser une munition comprenant un matériau énergétique structural ayant la composition en masse suivante :
- 10 à 30% de polystyrène en bille,
- 50 à 60% d'explosif secondaire non fusible,
- 10 à 30% de liant synthétique,
- 0 à 5% de fibres de renfort structural,
- 0 à 5% de matériau de masquage ou leurrage.

Ces derniers matériaux énergétiques sont mis en oeuvre par compression ou par cuisson dans un moule approprié (explosifs composites).

A titre d'exemple, on a réalisé les matériaux énergétiques avec les compositions suivantes :
**Exemple 1**
   - 20% de Trinitrotoluène,
   - 10% de micro ballons (phénoliques ou polyuréthanes),
   - 50% d'héxogène,
   - 20% de fibres de carbone.
**Exemple 2**
   - 20% de Trinitrotoluène,
   - 10% de micro ballons (phénoliques ou polyuréthane),
   - 50% d'héxogène,
   - 10% de fibres de carbone,
   - 10% de poudre d'Aluminium.

La poudre d'aluminium pourra avoir une granulométrie micrométrique (de l'ordre de 100 micromètres). Elle permet d'accroître l'effet de souffle de la composition.

Ces deux matériaux ont deux régimes de fonctionnement : un régime de combustion et un régime détonant.

Le tableau ci dessous donne pour chaque matériau les vitesses de détonation calculées.

| **Exemple** | **Vitesse de détonation (m/s)** |
|---|---|
| Exemple 1 | 6984 m/s |
| Exemple 2 | 7400 m/s |

Les valeurs sont analogues à celles d'un explosif classique tel l'hexolite 65/35 (65% en masse de trinitrotoluène, 35% d'hexogène) dont la vitesse de détonation est 8000 m/s.

Le matériau selon l'exemple 1 brûle par ailleurs à 2192 K en dispersant du carbone (près de 17% en masse de particules de carbone engendrées). Lorsqu'il est initié en mode combustion, il peut donc assurer une fonction de masquage.

Il est possible de remplacer les fibres de carbone par d'autres matériaux de renfort, par exemple par des fibres de verre aluminisées. Ces fibres seront dispersées lors d'une combustion de la composition, assurant ainsi une fonction de leurrage. La composition peut alors également être initiée en mode de détonation.

On pourra ainsi réaliser une composition associant :
**Exemple 3**
   - 20% de Trinitrotoluène,
   - 10% de micro ballons (phénoliques ou polyuréthane),
   - 50% d'héxogène,
   - 20% de fibres de verre aluminisées.

On pourra également réaliser une munition comprenant un matériau énergétique structural dans lequel au moins un des composants énergétiques est constitué par une composition pyrotechnique non explosive, par exemple une composition oxydo réductrice.

Cette composition pyrotechnique pourra alors être une composition fumigène, éclairante, éblouissante, colorée ou odoriférante ou exerçant un autre effet (par exemple une composition génératrice de gaz permettant de disperser une substance lacrymogène).

Un tel matériau, allégé par le renfort structural, permettra la réalisation de munitions moins pénalisantes du point de vue masse tout en ayant une tenue mécanique satisfaisante.

On pourra ainsi utiliser une composition fumigène telle que celles décrites par les brevets FR2560186 et FR2583037, ou une composition incorporant du phosphore rouge (fonction fumigène ou leurrage).

On pourra ainsi réaliser une munition incorporant un matériau énergétique structural ayant la composition en masse suivante :
- 50% à 80% d'une composition pyrotechnique,
- 10% à 30% d'un premier matériau de renfort structural,
- 0 à 5% de fibres longues de renfort structural.

Le premier matériau de renfort structural sera un matériau de type microbilles ou microballons et permettant donc d'alléger le matériau énergétique.

Les fibres longues du second matériau de renfort permettront éventuellement d'améliorer la tenue mécanique du matériau énergétique réalisé.

Comme composition pyrotechnique on pourra mettre en oeuvre une composition fumigène telle qu'une de celles décrites par le brevet FR2583037 et associant une poudre métallique (telle le magnésium), un liant générateur de particules de carbone (tel le naphtalène chloré) et un liant fluoré (tel le polyfluorure de vinylidène).

On pourra également choisir comme composition pyrotechnique une composition éclairante par exemple associant une poudre métallique (telle que le magnésium) et un liant fluoré (tel le polytétrafluoroéthyléne plus connu sous la marque déposée Téflon).

On pourra ainsi réaliser les compositions suivantes :
**Exemple 4**
   - 15 % de polystyrène en bille,
   - 75% de composition fumigène.

La composition fumigène pourra associer en masse : 17% de magnésium, 70% de naphtalène chloré, 13% de liant fluoré.
**Exemple 5**
   - 15 % de polystyrène en bille,
   - 75% de composition éclairante.

La composition éclairante pourra associer en masse : 54% de magnésium, 30% de polytétrafluoroéthylène et 16% copolymère de chloro- fluoroéthylène (plus connu sous la marque déposée Viton).

On pourra également réaliser un matériau énergétique structural dans lequel on incorporera de la poudre de laiton, des fibres de carbone ou de chaffs à l'intérieur d'une composition pyrotechnique oxydo-réductrice ou bien génératrice de gaz.

Une telle disposition permet de disperser un matériau de masquage ou leurrage (poudre de laiton ou fibres) lors de l'initiation de la composition.

On pourra par exemple réaliser une composition associant:
- 50% à 65% d'une composition pyrotechnique,
- 10% à 30% d'un premier matériau de renfort structural,
- 15% à 25% de poudre de laiton ou de fibres de carbone
ou de verre aluminisées.

Le premier matériau de renfort structural sera un matériau de type microbilles ou microballons et permettant donc d'alléger le matériau énergétique.

La composition pyrotechnique sera par exemple une composition associant (proportion en masse) : aluminium (20%) et oxyde de cuivre (80%) ou aluminium (40%) et perchlorate de potassium (60%).

A titre d'exemple de mise en oeuvre, la figure 1 montre une munition 10 qui ne forme pas partie de l'invention mais facilite sa compréhension, munition qui comprend un étui 11 dont seul le contour est ici représenté en pointillés.

Cet étui renferme une structure ou bloc 12 d'un matériau énergétique structural tel que décrit précédemment. Le bloc 12 est disposé dans une enveloppe 13 qui améliore sa tenue mécanique ainsi que l'étanchéité. L'enveloppe 13 est par exemple constituée par une couche de vernis cellulosique ou bien par un film de matière plastique, par exemple un film de polyéthylène, un matériau thermorétractable, un film aluminisé ou un tissu imprégné d'un liant.

La munition 10 comprend également deux dispositifs d'amorçages différents 14 et 15 qui sont reliés à un moyen de commande 16 (par exemple une fusée électronique programmable).

Le matériau énergétique structural du bloc. 12 comprend ici au moins un composant explosif et au moins un matériau de masquage ou de leurrage, tel que des fibres de carbone courtes, des paillettes de leurrage ("chaffs"), une poudre de laiton ou du phosphore rouge.

Le premier dispositif d'amorçage 15 est conçu pour communiquer un régime de détonation au bloc 12. Ce dispositif est constitué par exemple par un détonateur à fil chaud ou explosé ou encore par un initiateur à couche projetée (plus connu sous le nom de "Slapper").

Le deuxième dispositif d'amorçage 14 est conçu pour communiquer un régime de combustion au bloc 12. Ce dispositif est un inflammateur c'est à dire un composant produisant une flamme. On pourra également utiliser une micro torche à plasma (telle que décrite par le brevet FR2768810).

Ainsi, en fonction des besoins opérationnels on pourra faire fonctionner la munition dans un mode destructif (en commandant la mise en détonation du bloc 12) ou bien dans un mode de masquage (en commandant la mise en combustion du bloc 12).

Cette solution permet ainsi de définir une munition allégée pouvant avoir deux modes de fonctionnement distincts.

Il est bien entendu possible de définir une munition allégée mettant en oeuvre un matériau n'ayant qu'un seul mode de fonctionnement, par exemple fumigène ou explosif.

La figure 2 montre un premier mode de réalisation de l'invention dans lequel la munition constitue un drone 1.

Cet engin comprend un corps (ou fuselage) 2 portant deux ailes 3. Le fuselage est prolongé par une ogive 4.

Le fuselage renferme une unité de commande électronique 5 qui est reliée à un senseur 6 disposé dans l'ogive 4. Le senseur 6 pourra comporter une caméra à capteur à transfert de charge et également au moins un senseur infrarouge ou un radiomètre. Un moyen de transmission 7 est incorporé à l'unité électronique de commande 5 et permet d'assurer une communication (émission/réception) avec une station de pilotage distante (non représentée), par exemple disposée dans un véhicule.

L'unité électronique de commande 5 est également reliée à un moteur 8 qui entraîne un propulseur 9 tel une hélice.

Chaque aile 3 du drone 1 est réalisée en un bloc 12 d'un matériau énergétique structural. Des fibres longues 17 (en carbone ou en verre) sont incorporées dans les blocs 12 pour les renforcer mécaniquement. Comme cela est représenté schématiquement sur la figure 2, les fibres 17 forment ainsi un réseau qui associe des fibres 17a parallèles aux bords d'attaque et de fuite de l'aile et des fibres 17b perpendiculaires aux précédentes. Chaque bloc 12 sera recouvert extérieurement d'une enveloppe externe 13 par exemple un film de matière plastique ou de vernis conducteur.

Chaque bloc 12 peut être amorcé par deux dispositifs d'amorçages différents, un inflammateur 14 et un détonateur 15. Ces dispositifs sont reliés à un moyen de commande 16 qui est lui-même relié à l'unité électronique de commande 5.

Ainsi, le drone 1 emporte une charge utile constituée par la caméra 6 et le moyen de transmission d'informations 7.

Ce drone peut donc remplir une fonction de moyen d'observation comme un drône classique.

Le matériau énergétique structural formant ses ailes 3 permet d'utiliser également le drone 1 comme une munition d'attaque.

Dans ce cas les deux ailes seront initiées par le moyen de commande 16 et par l'intermédiaire des détonateurs 15.

Les moyens d'observation 6 et de transmission 7 permettront de guider le drone vers sa cible. Le moyen électronique de commande pourra alors être actionné à distance grâce à un ordre reçu par les moyens de transmission 7. L'ordre sera émis par exemple par une plate-forme de tir tel un véhicule assurant par ailleurs le pilotage du drône.

Alternativement, le moyen de commande des détonateurs 15 pourra être mis en oeuvre d'une façon autonome par l'unité de commande 5 comme suite à la détection par les moyens d'observation 6 d'une cible ayant des caractéristiques données (dimension et/ou signature infrarouge données).

Pour remplir une fonction de masquage ou de leurrage (suivant la nature du matériau associé au matériau actif) il sera enfin possible de commander l'initiation des ailes 3 dans un mode de combustion. Ce mode sera initié par la mise à feu des inflammateurs 14. L'initiation pourra là encore être commandée à distance par un opérateur ou bien intervenir automatiquement par exemple à l'issue d'un intervalle de temps pré programmé et mis en mémoire dans l'unité électronique de commande 5.

Il est ainsi possible de réaliser un drône de masse réduite, par exemple de poids inférieur à 500 g, et emportant néanmoins motorisation et moyens d'observation.

Ce drone assurera les fonctions d'observation d'un drone classique.

Il remplira également des fonctions pyrotechniques (détonation ou masquage ou leurrage) qui seront assurées par tout ou partie de la structure du drone sans pénaliser les capacités d'emport de celui ci.

On simplifie ainsi considérablement la dotation en munitions des véhicules de combat en fournissant un moyen d'observation, attaque et défense peu coûteux qui est susceptible de remplir les fonctions de différents moyens auparavant distincts (drône d'observation, munitions de riposte, munitions de masquage ou leurrage).

On pourra également à titre de variante réaliser un drone 1 dont le corps 2 est sous la forme d'un tube réalisé en un matériau énergétique structural tel que décrit précédemment. Ce tube pourra être initié par des moyens d'amorçage spécifiques ou bien par un ou plusieurs relais pyrotechniques interposés entre les ailes et le corps.

On pourra réaliser également le corps du drone 1 en un matériau de nature différente de celui des ailes 3, par exemple pour assurer une autre fonction (leurrage par exemple si les ailes assurent une fonction masquage).

A titre de variante, il est bien entendu possible de définir un drone 1 dont les ailes 3 sont réalisées en un matériau qui ne remplisse qu'une seule fonction : détonation, masquage ou leurrage. Dans ce cas chaque bloc ne comportera qu'un seul dispositif d'amorçage (inflammateur ou détonateur) relié au moyen de commande.

Selon l'invention, on pourra réaliser d'autres types de drones.

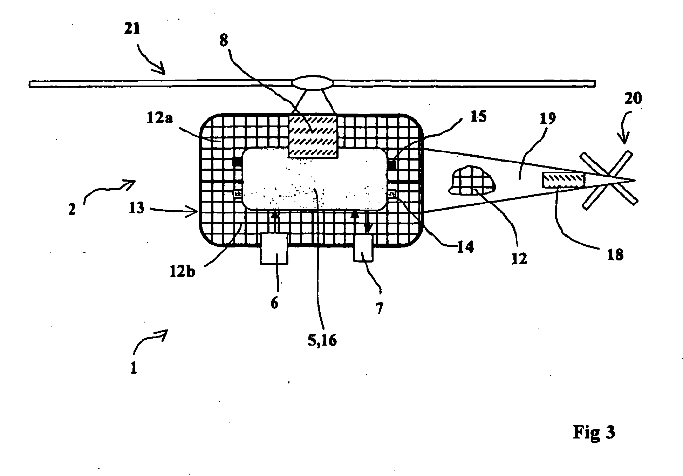

La figure 3 montre ainsi un petit hélicoptère 1 dont le corps 2 est formé de l'assemblage de deux coquilles 12a, 12b d'un matériau énergétique structural tel que décrit précédemment. Ce matériau est entouré d'une enveloppe 13 en matière plastique. Le corps 2 porte une queue 19 qui sera, elle aussi, avantageusement réalisée en un matériau énergétique structural 12, de même nature ou de nature différente de celui du corps.

La queue 19 renferme un petit moteur d'équilibrage 18 qui actionne un rotor arrière 20. Le corps 2 renferme un moteur principal 8 qui entraîne un rotor sustentateur 21.

Le corps 2 comporte un logement interne à l'intérieur duquel est disposée l'unité électronique de commande 5 ainsi que le moyen de commande 16 des dispositifs d'amorçages 14 et 15 (inflammateurs et/ou détonateurs).

Une caméra d'observation 6 est reliée à l'unité de commande et des moyens de transmission 7 tels une antenne reliée à un modulateur/démodulateur seront reliés également à l'unité de commande 5.

Le fonctionnement d'un tel drone est analogue à celui décrit précédemment. La structure du corps 2 étant peu contrainte mécaniquement, les renforts en fibres longues ne sont pas nécessaires. Ils pourront par contre être prévus pour renforcer la queue 19 si celle ci est (elle aussi) réalisée en un matériau énergétique structural.

Il est bien entendu possible de réaliser la queue en matière plastique, en alliage d'aluminium ou en matériau biodégradable.

## Revendications

1. Drone (1) constitué d'un corps (2) et d'ailes (3) et comprenant une charge utile associée à une structure d'emport (12) de la charge utile, **caractérisé en ce qu'**une partie au moins de la structure d'emport (12) constitue une munition (10) ou un composant de munition en étant réalisée en un matériau énergétique comprenant au moins un composant énergétique mélangé à au moins un premier matériau de renfort structural, ladite structure (12) en matériau énergétique formant les ailes (3) dudit drone et comportant au moins un logement recevant une motorisation (8) ainsi que le ou les dispositifs d'amorçage (14,15) et le moyen de commande (16).

2. Drone (1) comprenant une charge utile associée à une structure d'emport (12) de la charge utile selon la revendication 1, **caractérisé en ce que** le matériau énergétique forme le corps (2) et les ailes (3) du drone.

3. Drone (1) formant hélicoptère de type drone comprenant une charge utile associée à une structure d'emport (12) de la charge utile, **caractérisé en ce qu'**une partie au moins de la structure d'emport (12) constitue une munition (10) ou un composant de munition en étant réalisée en un matériau énergétique comprenant au moins un composant énergétique mélangé à au moins un premier matériau de renfort structural, ladite structure (12) en matériau énergétique formant le corps dudit hélicoptère et comportant au moins un logement recevant une motorisation (8) ainsi que le ou les dispositifs d'amorçage (14,15) et le moyen de commande (16).

4. Drone (1) selon une des revendications 2 ou 3, **caractérisé en ce qu'**il comporte au moins un dispositif d'amorçage (14, 15) de la structure énergétique (12), dispositif relié à un moyen de commande (16).

5. Drone (1) selon une des revendications 2 à 4, **caractérisé en ce que** le premier matériau de renfort structural comprend au moins un des matériaux suivants : micro ballons phénoliques, polystyrène en bille, nano tubes de carbone.

6. Drone (1) selon une des revendications 2 à 5, **caractérisé en ce qu'**elle comporte également un deuxième matériau de renfort structural choisi parmi les fibres longues naturelles ou synthétiques ou les tissus réalisés avec de telles fibres.

7. Drone (1) selon la revendication 6, **caractérisé en ce que** les fibres sont choisies parmi les matériaux suivants: fibres de carbone, de verre, de chanvre, de kevlar.

8. Drone (1) selon une des revendications 2 à 7, **caractérisé en ce qu'**il comprend globalement entre 10 et 35% en masse de matériau de renfort structural.

9. Drone (1) selon une des revendications 2 à 8, **caractérisé en ce qu'**il comprend au moins un matériau de masquage ou de leurrage.

10. Drone (1) selon la revendication 9, **caractérisé en ce que** le matériau de masquage ou de leurrage est choisi parmi les matériaux suivants : fibres de carbone courtes, poudre de carbone, poudre de laiton, de bronze, paillettes métallisées, fibres polymères revêtues d'un matériau conducteur, phosphore rouge.

11. Drone (1) selon une des revendications 2 à 8, **caractérisé en ce qu'**au moins un des composants énergétiques est un explosif.

12. Drone (1) selon la revendication 11, **caractérisé en ce que** le composant énergétique comprend au moins un explosif fusible associé à un explosif non fusible.

13. Drone (1) selon une des revendications 11 ou 12, **caractérisé en ce qu'**une partie au moins de la structure est réalisée en un matériau énergétique ayant la composition en masse suivante :
- 65 à 90% d'une composition explosive associant un ou plusieurs matériaux explosifs et éventuellement un liant,
- 10 à 30% d'un premier matériau de renfort structural,
- 0 à 5% d'un deuxième matériau de renfort sous forme de fibres longues.

14. Drone (1) selon la revendication 13, **caractérisé en ce qu'**une partie au moins de la structure est réalisée en un matériau énergétique ayant la composition en masse suivante :
- 10 à 30% d'un explosif secondaire fusible,
- 10 à 30% d'un premier matériau de renfort structural,
- 50 à 60% d'explosif secondaire non fusible,
- 0 à 5% de fibres de renfort structural,
- 0 à 5% de matériau de masquage ou leurrage.

15. Drone (1) selon la revendication 13, **caractérisé en ce qu'**une partie au moins de la structure est réalisée en un matériau énergétique ayant la composition en masse suivante :
- 10 à 30% d'un premier matériau de renfort structural,
- 50 à 60% d'explosif secondaire non fusible,
- 10 à 30% de liant synthétique,
- 0 à 5% de fibres de renfort structural,
- 0 à 5% de matériau de masquage ou leurrage.

16. Drone (1) selon la revendication 14, **caractérisé en ce qu'**une partie au moins de la structure est réalisée en un matériau énergétique ayant la composition en masse suivante :
- 20% de trinitrotoluène,
- 50% d'hexogène,
- 10% de micro ballons,
- 20% de fibres de carbone ou de verre.

17. Drone (1) selon la revendication 14, **caractérisé en ce qu'**une partie au moins de la structure est réalisée en un matériau énergétique ayant la composition en masse suivante :
- 20% de trinitrotoluène,
- 50% d'hexogène,
- 10% de micro ballons,
- 10% de fibres de carbone ou de verre,
- 10% de poudre d'aluminium.

18. Drone (1) selon une des revendications 2 à 10, **caractérisé en ce qu'**au moins un des composants énergétiques est constitué par une composition pyrotechnique.

19. Drone (1) selon la revendication 18, **caractérisé en ce que** la composition pyrotechnique est une composition fumigène ou éclairante.

20. Drone (1) selon la revendication 19, **caractérisé en ce qu'**une partie au moins de la structure est réalisée en un matériau énergétique ayant la composition en masse suivante :
- 75% de composition fumigène,
- 15% d'un premier matériau de renfort structural.

21. Drone (1) selon la revendication 19, **caractérisé en ce qu'**une partie au moins de la structure est réalisée en un matériau énergétique ayant la composition en masse suivante :
- 75% de composition éclairante,
- 15% d'un premier matériau de renfort structural.

22. Drone (1) selon la revendication 18, **caractérisé en ce qu'**une partie au moins de la structure est réalisée en un matériau énergétique ayant la composition en masse suivante :
- 50% à 65% d'une composition pyrotechnique,
- 10% à 30% d'un premier matériau de renfort structural,
- 15% à 25% de poudre de laiton ou de fibres de carbone
ou de verre aluminisées.

23. Drone (1) selon une des revendications 2 à 22, **caractérisé en ce que** le matériau énergétique comprend au moins un composant explosif et au moins un matériau de masquage ou de leurrage et **en ce que** la munition ou le composant de munition comporte au moins deux dispositifs d'amorçage (14, 15) de la structure énergétique pouvant être initiés par un moyen de commande (16), un premier dispositif (15) conçu pour communiquer un régime de détonation à la structure (12) assurant ainsi à la munition ou au composant de munition une fonction de destruction et un deuxième dispositif (14) conçu pour communiquer un régime de combustion à la structure (12) assurant ainsi à la munition ou au composant de munition une fonction de masquage ou de leurrage.

24. Drone (1) selon une des revendications 2 ou 3, **caractérisé en ce que** la structure (12) en matériau énergétique porte également au moins une charge utile telle qu'une caméra (6) et/ou un relais (7) de transmission d'informations.

25. Drone (1) selon une des revendications 2 à 24, **caractérisé en ce que** la structure en matériau énergétique est recouverte d'une couche de protection.

## Claims

1. Drone (1) made of a body (2) and wings (3) and comprising a payload associated with a carrying structure (12) to carry the payload, **characterized by** the fact that at least one part of the structure (12) constitutes an ammunition (10) or an ammunition component made of energetic material comprising at least one energetic component mixed with at least a first structural reinforcement material, said structure (12) in energetic material forming the wings (3) of the drone and incorporating at least one housing to receive a motorisation (8) as well as the priming device(s) (14, 15) and the control means (16).

2. Drone (1) comprising a payload associated with a structure (12) of the payload according claim 1, **characterised in that** the energetic material builds the body (2) and the wings (3) of the drone.

3. Drone (1) as an helicopter of type drone comprising a payload associated to a carrying structure (12) of the payload, **characterized in that** at least a part of the carrying structure (12) constituting an ammunition (10) or an ammunition component made of energetic material comprising at least one energetic component mixed with at least a first structural reinforcement material, said structure (12) in energetic material forming the body of said helicopter and incorporating at least one housing to receive a motorisation (8) as well as the priming device(s) (14, 15) and the control means (16).

4. Drone according to one of Claims 1 to 3, **characterized by** the fact that it incorporates at least one priming device (14, 15) for the energetic structure (12), such device connected to control means (16).

5. Drone according to one of Claims 2 to 4, **characterized by** the fact that the first structural reinforcement material comprises at least one of the following materials: phenolic micro balloons, polystyrene balls, carbon nanotubes.

6. Drone according to one of Claims 2 to 5, **characterized by** the fact that it also incorporates a second structural reinforcement material selected from among long natural or synthetic fibres or materials made using such fibres.

7. Drone according to Claim 6, **characterized by** the fact that the fibres are selected from among the following materials: carbon, glass, hemp, Kevlar fibres.

8. Drone according to one of Claims 2 to 7, **characterized by** the fact that it globally comprises between 10 and 35% in mass of structural reinforcement material.

9. Drone according to one of Claims 2 to 8, **characterized by** the fact that it comprises at least one masking or decoying material.

10. Drone according to Claim 9, **characterized by** the fact that the masking or decoying material is selected from among the following materials: short carbon fibres, carbon powder, brass powder, bronze powder, metallic flakes, polymer fibres coated with a conductive material, red phosphorus.

11. Drone according to one of Claims 1 to 8, **characterized by** the fact that at least one of the energetic components is an explosive.

12. Drone according to Claim 11, **characterized by** the fact that the energetic component comprises at least one fusible explosive associated with one non-fusible explosive.

13. Drone according to Claim 11 or 12, **characterized by** the fact that its structure is at least partly made of an energetic material having the following composition in mass:
- 65 to 90% of an explosive composition associating one or several explosive materials and possible a binder,
- 10 to 30% of a first structural reinforcement material,
- 0 to 5% of a second structural reinforcement material in the form of long fibres.

14. Drone according to Claim 13, **characterized by** the fact that its structure is at least partly made of an energetic material having the following composition in mass:
- 10 to 30% of a secondary fusible explosive,
- 10 to 30% of a first structural reinforcement material,
- 50 to 60% of a secondary non-fusible explosive,
- 0 to 5% of structural reinforcement fibres,
- 0 to 5% of masking or decoying materials.

15. Drone according to Claim 13, **characterized by** the fact that its structure is at least partly made of an energetic material having the following composition in mass:
- 10 to 30% of a first structural reinforcement material,
- 50 to 60% of a secondary non-fusible explosive,
- 10 to 30% of a synthetic binder,
- 0 to 5% of structural reinforcement fibres,
- 0 to 5% of masking or decoying materials.

16. Drone according to Claim 14, **characterized by** the fact that its structure is at least partly made of an energetic material having the following composition in mass:
- 20% of trinitrotoluene,
- 50% of cyclonite,
- 10% of micro balloons,
- 20% of carbon or glass fibres.

17. Drone according to Claim 14, **characterized by** the fact that its structure is at least partly made of an energetic material having the following composition in mass:
- 20% of trinitrotoluene,
- 50% of cyclonite,
- 10% of micro balloons,
- 10% of carbon or glass fibres,
- 10% of aluminium powder.

18. Drone according to one of Claims 2 to 10, **characterized by** the fact that at least one of the energetic components is constituted by a pyrotechnic composition.

19. Drone according to Claim 18, **characterized by** the fact that the pyrotechnic composition is a smoke-producing composition or a flare.

20. Drone according to Claim 19, **characterized by** the fact that its structure is at least partly made of an energetic material having the following composition in mass:
- 75% of smoke-producing composition,
- 15% of a first structural reinforcement material.

21. Drone according to Claim 19, **characterized by** the fact that its structure is at least partly made of an energetic material having the following composition in mass:
- 75% of a light-producing composition,
- 15% of a first structural reinforcement material.

22. Drone according to Claim 18, **characterized by** the fact that its structure is at least partly made of an energetic material having the following composition in mass:
- 50 to 60% of a pyrotechnic composition,
- 10 to 30% of a first structural reinforcement material,
- 15 to 25% of a brass powder or carbon fibres or aluminised glass.

23. Drone according to one of Claims 2 to 22, **characterized by** the fact that the energetic material comprises at least one explosive component and at least one masking or decoying material and in that the piece of ammunition or ammunition component will incorporate at least two priming devices (14, 15) for the energetic structure able to be ignited by control means (16), a first device (15) designed to communicate a detonation regime to the structure (12) thereby ensuring a destructive function for the piece of ammunition or ammunition component and a second device (14) designed to communicate a combustive regime to the structure (12) and thereby ensuring a masking or decoying function for the piece of ammunition or ammunition component.

24. Drone according to one of Claims 2 or 3, **characterized by** the fact that the energetic material structure (12) also carries at least one payload such as a camera (6) and/or data transmission relay (7).

25. Drone according to one of Claims 2 to 24, **characterized by** the fact that the energetic material structure is covered with a protective layer.

## Patentansprüche

1. Drohne (1), die von einem Körper (2) und Flügel (3) gebildet wird und eine Nutzlast umfasst, die einer Struktur zur Mitnahme (12) der Nutzlast zugeordnet ist, **dadurch gekennzeichnet, dass** wenigstens ein Teil der Struktur zur Mitnahme (12) eine Munition (10) oder eine Munitionskomponente darstellt, wobei sie aus einem energetischen Material ausgeführt ist, das wenigstens eine energetische Komponente umfasst, die mit wenigstens einem ersten strukturellen Verstärkungsmaterial vermengt ist, wobei die so genannte Struktur (12) aus energetischem Material die Flügel (3) der so genannten Drohne bildet und wenigstens eine Aufnahme umfasst, in der eine Motor (8) sowie die Zündvorrichtung oder Zündvorrichtungen (14, 15) und das Steuermittel (16) angeordnet sind.

2. Drohne (1), die eine Nutzlast umfasst, die einer Struktur zur Mitnahme (12) der Nutzlast nach Anspruch 1 zugeordnet ist, **dadurch gekennzeichnet, dass** das energetische Material den Körper (2) und die Flügel (3) der Drohne bildet.

3. Drohne (1), die einen Helikopter wie eine Drohne bildet, die eine Nutzlast umfasst, die einer Struktur zur Mitnahme (12) der Nutzlast zugeordnet ist, **dadurch gekennzeichnet, dass** wenigstens ein Teil der Struktur zur Mitnahme (12) eine Munition (10) oder eine Munitionskomponente darstellt, wobei sie aus einem energetischen Material ausgeführt ist, das wenigstens eine energetische Komponente umfasst, die mit wenigstens einem ersten strukturellen Verstärkungsmaterial vermengt ist, wobei die so genannte Struktur (12) aus energetischem Material den Körper des so genannten Helikopters bildet und wenigstens eine Aufnahme umfasst, in der eine Motor (8) sowie die Zündvorrichtung oder Zündvorrichtungen (14, 15) und das Steuermittel (16) angeordnet sind.

4. Drohne (1) nach einem der Ansprüche 2 oder 3, **dadurch gekennzeichnet, dass** sie wenigstens eine Zündvorrichtung (14, 15) der energetischen Struktur (12) umfasst, wobei die Vorrichtung mit einem Steuermittel (16) verbunden ist.

5. Drohne (1) nach einem der Ansprüche 2 bis 4, **dadurch gekennzeichnet, dass** das erste strukturelle Verstärkungsmaterial wenigstens eines der folgenden Materialien umfasst: Phenol-Mikroballons, Polystyrolkugeln, Nanoröhrchen aus Karbon.

6. Drohne (1) nach einem der Ansprüche 2 bis 5, **dadurch gekennzeichnet, dass** sie ebenfalls ein zweites strukturelles Verstärkungsmaterial umfasst, das aus den natürlichen oder synthetischen langen Fasern oder den mit derartigen Fasern hergestellten Geweben ausgewählt wird.

7. Drohne (1) nach Anspruch 6, **dadurch gekennzeichnet, dass** die Fasern aus den folgenden Materialien ausgewählt sind: Fasern aus Karbon, Glas, Hanf oder Kevlar.

8. Drohne (1) nach einem der Ansprüche 2 bis 7, **dadurch gekennzeichnet, dass** sie im Großen und Ganzen zwischen 10 und 35% in Masse des strukturellen Verstärkungsmaterials umfasst.

9. Drohne (1) nach einem der Ansprüche 2 bis 8, **dadurch gekennzeichnet, dass** sie wenigstens ein Material zur Tarnung oder zur Ablenkung umfasst.

10. Drohne (1) nach Anspruch 9, **dadurch gekennzeichnet, dass** das Material zur Tarnung oder Ablenkung aus den folgenden Materialien gewählt ist: Kurze Karbonfasern, Karbonpulver, Pulver von Messing, von Bronze, metallisierte Düppel, mit einem leitfähigen Material beschichtete Polymerfasern, roter Phosphor.

11. Drohne (1) nach einem der Ansprüche 2 bis 10, **dadurch gekennzeichnet, dass** wenigstens eine der energetischen Komponenten ein Sprengstoff ist.

12. Drohne (1) nach Anspruch 11, **dadurch gekennzeichnet, dass** die energetische Komponente wenigstens einen schmelzbaren Sprengstoff umfasst, der mit einem nicht schmelzbaren Sprengstoff verknüpft ist.

13. Drohne (1) nach einem der Ansprüche 11 oder 12, **dadurch gekennzeichnet, dass** wenigstens ein Teil der Struktur aus einem energetischen Material ausgeführt ist, das die folgende Zusammensetzung in Masse besitzt:
- 65 bis 90% einer explosiven Zusammensetzung, die ein oder mehrere explosive Materialien und eventuell ein Bindemittel verknüpft,
- 10 bis 30% eines ersten strukturellen Verstärkungsmaterials,
- 0 bis 5% eines zweiten Verstärkungsmaterials in Form von langen Fasern.

14. Drohne (1) nach Anspruch 13, **dadurch gekennzeichnet, dass** wenigstens ein Teil der Struktur aus einem energetischen Material ausgeführt ist, das die folgende Zusammensetzung in Masse besitzt:
- 10 bis 30% eines zweiten schmelzbaren Sprengstoffes,
- 10 bis 30% eines ersten strukturellen Verstärkungsmaterials,
- 50 bis 60% eines zweiten nicht schmelzbaren Sprengstoffes,
- 0 bis 5% Fasern zur strukturellen Verstärkung,
- 0 bis 5% Material zur Tarnung oder Ablenkung.

15. Drohne (1) nach Anspruch 13, **dadurch gekennzeichnet, dass** wenigstens ein Teil der Struktur aus einem energetischen Material ausgeführt ist, das die folgende Zusammensetzung in Masse besitzt:
- 10 bis 30% eines ersten strukturellen Verstärkungsmaterials,
- 50 bis 60% eines zweiten nicht schmelzbaren Sprengstoffes,
- 10 bis 30% synthetisches Bindemittel,
- 0 bis 5% Fasern zur strukturellen Verstärkung,
- 0 bis 5% Material zur Tarnung oder Ablenkung.

16. Drohne (1) nach Anspruch 14, **dadurch gekennzeichnet, dass** wenigstens ein Teil der Struktur aus einem energetischen Material ausgeführt ist, das die folgende Zusammensetzung in Masse besitzt:
- 20% Trinitrotoluol,
- 50% Hexogen,
- 10% Mikroballons,
- 20% Fasern aus Karbon oder Glas.

17. Drohne (1) nach Anspruch 14, **dadurch gekennzeichnet, dass** wenigstens ein Teil der Struktur aus einem energetischen Material ausgeführt ist, das die folgende Zusammensetzung in Masse besitzt:
- 20% Trinitrotoluol,
- 50% Hexogen,
- 10% Mikroballons,
- 10% Fasern aus Karbon oder Glas,
- 10% Aluminiumpulver.

18. Drohne (1) nach einem der Ansprüche 2 bis 10, **dadurch gekennzeichnet, dass** wenigstens eine der energetischen Komponenten von einer pyrotechnischen Zusammensetzung gebildet wird.

19. Drohne (1) nach Anspruch 18, **dadurch gekennzeichnet, dass** die pyrotechnische Zusammensetzung eine Raucherzeuger- oder Leucht-Zusammensetzung ist.

20. Drohne (1) nach Anspruch 19, **dadurch gekennzeichnet, dass** wenigstens ein Teil der Struktur aus einem energetischen Material ausgeführt ist, das die folgende Zusammensetzung in Masse besitzt:
- 75% Raucherzeuger-Zusammensetzung,
- 15% eines ersten strukturellen Verstärkungsmaterials.

21. Drohne (1) nach Anspruch 19, **dadurch gekennzeichnet, dass** wenigstens ein Teil der Struktur aus einem energetischen Material ausgeführt ist, das die folgende Zusammensetzung in Masse besitzt:
- 75% Leucht-Zusammensetzung,
- 15% eines ersten strukturellen Verstärkungsmaterials.

22. Drohne (1) nach Anspruch 18, **dadurch gekennzeichnet, dass** wenigstens ein Teil der Struktur aus einem energetischen Material ausgeführt ist, das die folgende Zusammensetzung in Masse besitzt:
- 50 bis 65% einer pyrotechnischen Zusammensetzung,
- 10 bis 30% eines ersten strukturellen Verstärkungsmaterials,
- 15% bis 25% Messingpulver oder aluminisierte Fasern aus Karbon oder aus Glas.

23. Drohne (1) nach einem der Ansprüche 2 bis 22, **dadurch gekennzeichnet, dass** das energetische Material wenigstens eine explosive Komponente und wenigstens ein Material zur Tarnung oder zur Ablenkung umfasst, und dass die Munition oder die Munitionskomponente wenigstens zwei Vorrichtungen zum Zünden (14, 15) der energetischen Struktur umfasst, die durch ein Steuermittel (16) initiiert werden können, wobei eine erste Vorrichtung (15) dafür ausgelegt ist, um der Struktur (12) einen Detonations-Betriebszustand zu verleihen, und so für die Munition oder die Munitionskomponente eine Zerstörungsfunktion gewährleistet, und eine zweite Vorrichtung (14) dafür ausgelegt ist, um der Struktur (12) einen Verbrennungs-Betriebszustand zu verleihen, und so für die Munition oder die Munitionskomponente eine Funktion der Tarnung oder Ablenkung gewährleistet.

24. Drohne (1) nach einem der Ansprüche 2 oder 3, **dadurch gekennzeichnet, dass** die Struktur (12) aus energetischem Material ebenfalls wenigstens eine Nutzlast trägt, wie eine Kamera (6) und / oder ein Relais (7) zur Übertragung von Informationen.

25. Drohne (1) nach einem der Ansprüche 2 bis 24, **dadurch gekennzeichnet, dass** die Struktur aus energetischem Material mit einer Schutzschicht überzogen ist.
